Europäisches Patentamt

(19) European Patent Office

Office européen des brevets

(11) Publication number: 0 385 026 A2

## (12) EUROPEAN PATENT APPLICATION

(21) Application number: 89309655.2

(22) Date of filing: 22.09.89

(51) Int. Cl.⁵: G01N 30/22, G01N 30/34

(30) Priority: 03.03.89 US 319431

(43) Date of publication of application:
05.09.90 Bulletin 90/36

(84) Designated Contracting States:
CH DE FR GB IT LI

(71) Applicant: Spectra-Physics Inc.
3333 North First Street
San Jose California 95134-1995(US)

(72) Inventor: Nohl, Andre
4464 Partridge Court
San Jose California(US)

(74) Representative: Jones, Ian et al
POLLAK MERCER & TENCH High Holborn
House 52-54 High Holborn
London WC1V 6RY(GB)

(54) Diluting apparatus and method.

(57) A diluting apparatus for use with a high performance liquid chromatography (HPLC) apparatus includes a multiport valve under automated control and an exponential mixing chamber connected to the multiport valve. The multiport valve receives the mobile phase from the detector of the apparatus and injects the liquid sample into the mobile phase. Then the sample and mobile phase are mixed in the exponential mixing chamber, and sent into the test column. The invention permits automatic dilution to a high precision, and also conserves the mobile phase solvnet used in the apparatus.

Figure 2

# DILUTING APPARATUS AND METHOD

This invention pertains to an apparatus for and a method of mixing a first and a second fluid, for example, to effect dilution of a fluid sample with a solvent. The invention is applicable to chemical testing apparatus, and especially to high performance liquid chromatography (HPLC) apparatus.

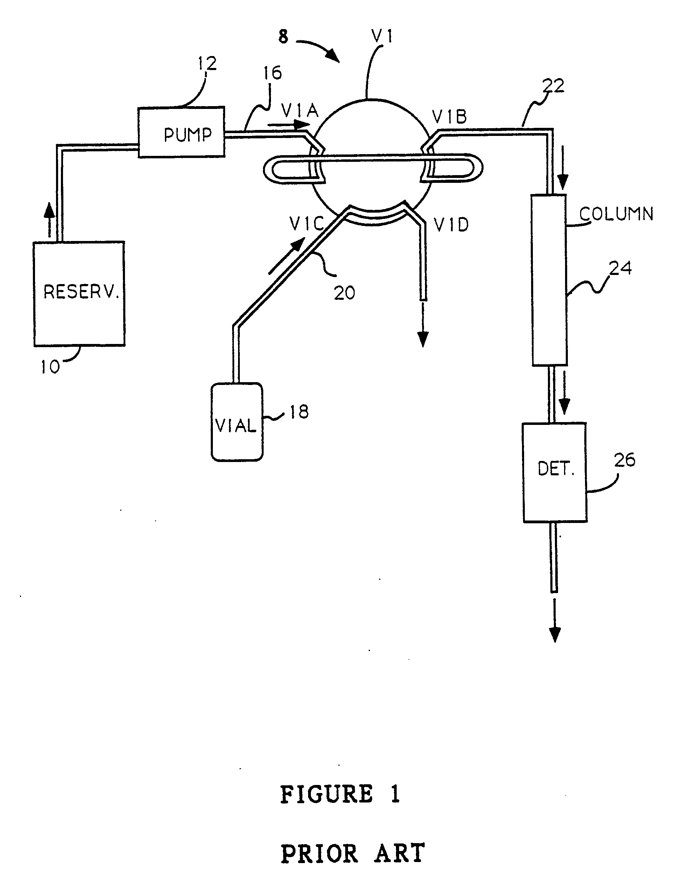

High performance liquid chromatography (HPLC) is well known as a method of chemical analysis. A chromatographic separation minimally requires that a sample be introduced into a fluid stream that flows through a bed of support particles in a column. The support particles are known as the stationary phase. The stream is known as the mobile phase. A typical prior art HPLC system 8 is shown in Figure 1 of the accompanying drawings. A reservoir 10 contains a liquid that is a solvent or carrier. The solvent or carrier is also called the mobile phase. A quantity of the mobile phase is pumped via tubing 16 by precision pump 12 into a conventional six port valve. A six port valve such as valve V1 has two sets of in and out ports V1A, V1B, V1C, and V1D plus an internal loop V1L that hold a precise volume of fluid which can be connected to either set of ports, by throwing (i.e., operating) the valve V1. The liquid to be sampled (i.e., "the sample") is provided to valve V1 from a sample vial 18 by tubing 20, where the sample is introduced into the mobile phase. The mixed mobile phase and sample then flow through tubing 22 to chromatography column 24, where the constituents of the sample are separated by the stationary phase. The various constituents plus the mobile phase then flow to detector 26, where the actual detection takes place by conventional chromatography methods. The sample and mobile phase are then flushed out of the system and disposed of.

The raw sample usually requires dilution before being introduced to an HPLC. The dilution is normally done with the same solvent mixture as used in the mobile phase. The amount of dilution of the sample is critical, because high precision is needed in dilution to provide accurate test results. The range of dilution factors needed (i.e., ratio of solvent volume to sample volume) in the typical system is from 10 to 10,000. The operation of the HPLC apparatus 8 is typically under human (i.e. manual) control or sometimes robotic control (not shown). Human control, with a trained operator, can control dilution to within about 0.5%; i.e., the actual ratio of solvent volume to sample volume is within 1 part in 200 of what is desired. Robotic control in the prior art is inferior to manual control, and provides a precision of only about 1%. The robot needed for robotic control is expensive also. Greater precision than provided by human or robotic control is desirable to provide more accurate test results.

In addition, the above described prior art has a second deficiency in that it tends to waste the mobile phase liquid, which is often a fairly expensive solvent or other liquid, and which often requires extensive preparation and handling. In some applications an HPLC apparatus 8 is only used a few times per day for testing, but is kept operating continually (i.e., the mobile phase is sent through the system continually). This is generally the situation when the HPLC apparatus 8 is part of a process control system. In this situation therefore, most of the time when the mobile phase is pumped from its reservoir 10 into the valve V1, the mobile phase is wasted because there is no sample to be injected.

Also known in the art are exponential dilution chambers (not shown). These chambers are containers that accept one (or more) fluids and mix the fluid(s) in a swirling fashion so as to quickly achieve a thorough mixture. A constant flow of solvent flushes the mixing chamber, and achieves the exponential dilution.

In accordance with the present invention, a second multiport valve is introduced into an HPLC test apparatus for providing the sample so as to form a recirculating supply loop. The second multiport valve injects a measured amount of the sample into a measured flow of the mobile phase. The mobile phase comes from the supply loop, and in prior art operation would have been flushed and hence wasted. The sample and mobile phase are mixed in an exponential mixing chamber, and then flow through tubing into the first multiport valve, which is then thrown, and the sample and mobile phase then flow to the test column and detector, as in the prior art.

The process in accordance with the present invention thus includes these steps:

1. The second multiport valve is filled with the sample.

2. The sample in the second multiport valve is diluted by flowing solvent through the second multiport valve filled with the sample into the exponential mixing chamber. The diluted sample then flows through the loop of the first multiport valve.

3. The first multiport valve is then thrown, injecting the diluted sample into the test portion of the HPLC system.

The second valve and exponential mixing chamber thus form a mixing means, which mixes the sample with a quantity of solvent provided from a supply means. The supply means includes the first valve, test column and detector. The mixing means then provides the mixed sample and solvent to the supply means for testing.

The operation of the first and second valves is timed, preferably by an automated timer, so as to achieve high precision of the amount of dilution. Thus, a dilution precision of 0.2% is achieved, far better than the prior art manual or robotic methods. In addition, the provision of the second valve, exponential mixing chamber and timer are far less expensive than a robot. As a further advantage, the present invention uses mobile phase liquid for dilution that otherwise would have been flushed away and wasted.

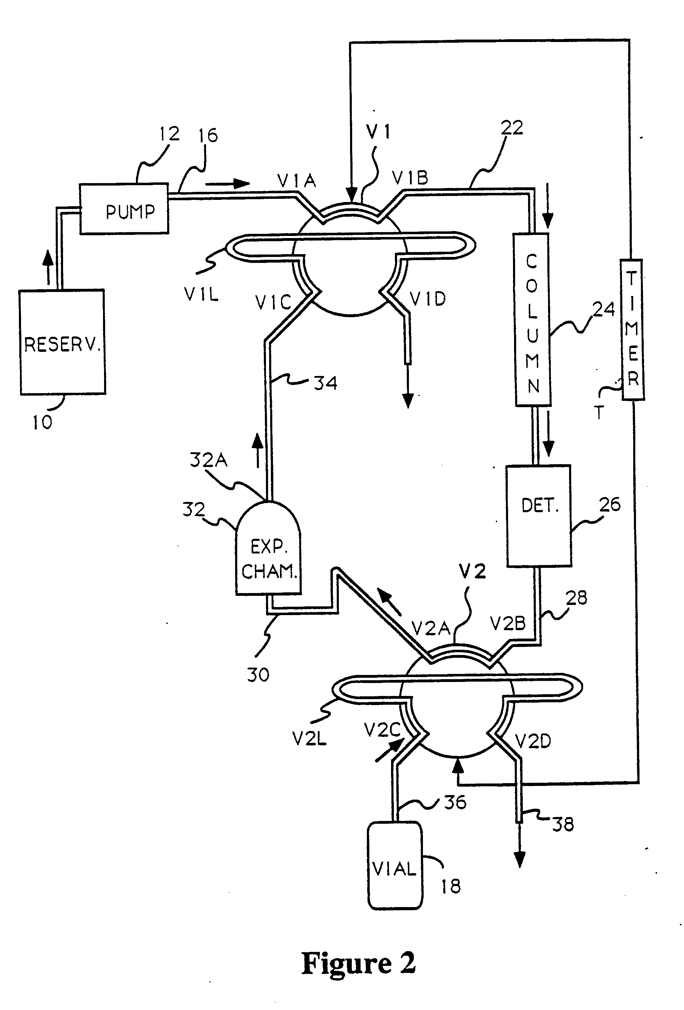

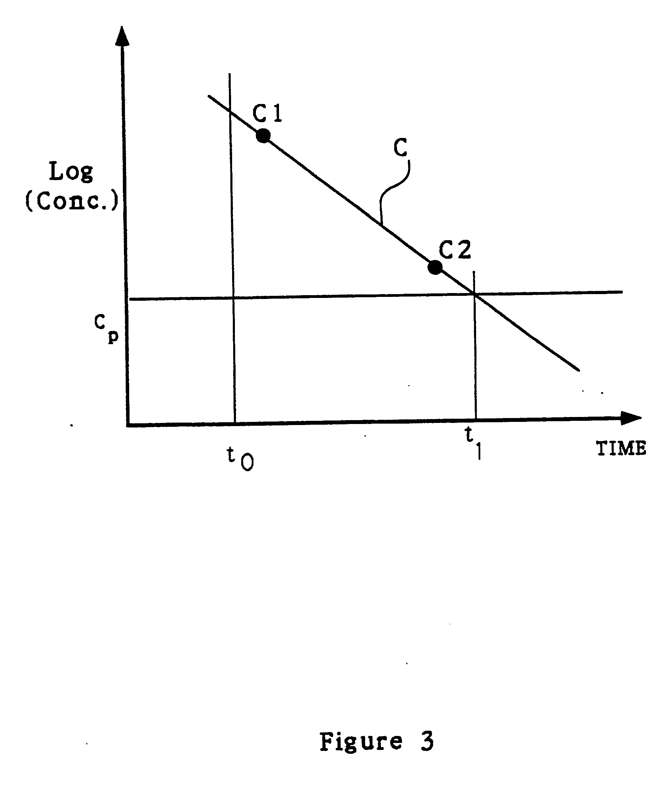

The invention is further described below, by way of example, with reference to Figures 2 and 3 of the accompanying drawings, in which:

Figure 2 shows an HPLC apparatus in accordance with the present invention, and

Figure 3 shows graphically a dilution of a sample in accordance with the prsent invention.

Similar reference numbers in Figures 1 and 2 denote similar or identical structures.

An HPLC apparatus with an automatic dilutor in accordance with the present invention is shown in Figure 2.

The HPLC apparatus includes mobile phase reservoir 10, precision pump 12, six port valve V1, tubing 16 connecting six port valve V1 to pump 12, liquid chromatography column 24, tubing 22 connecting six port valve V1 to colume 24, and detector 26.

In accordance with the present invention, a second conventional six port valve V2 is connected to detector 26 by tubing 28. Conventional exponential mixing chamber 32 is connected to second vale V2 by tubing 30. Tubing 34 connects chamber 32 to the first six port valve V1. Tubing 36 and tubing 38 respectively supply from supply vial 18 to, and discharge the sample fluid from, second valve V2.

The operation of the apparatus shown in Figure 2 is as follows, in accordance with the preferred embodiment of the present invention. 1. Valves V1 and V2 are set in the position where the mobile phase does not flow through the loop V1L or V2L, as shown in Figure 2.

2. The system is flushed by the mobile phase solvent pumped out of the reservoir 10 by pump 12. The mobile phase path is as represented on Figure 2. That is, the solvent flows through tubing 16 to port V1A of valve V1, out port V1B to tubing 22, through column 24 to detector 26, through tubing 28 to port V2B of valve V2, out port V2A, through tubing 30 to chamber 32, and into port V1C of valve V1 and out to waste at port V1D. The loop V1L of valve V1 is connected to the exit 32A of the mixing chamber 32 and the loop V2L of valve V2 is connected to the sample line 36.

3. The valve V2 is loaded with the desired amount of sample by pushing the sample out of the vial 18 conventionally by a syringe (not shown). The sample enters valve V2 through port V2C and then enters the loop V2L.

4. The amount of sample introduced into loop V2L of valve V2 is injected into the tubing 30 by throwing second valve V2, at time zero (i.e., $t_0$) by action of timer T.

5. The sample is transferred into the mixing chamber 32 by the mobile phase stream, and exponential dilution starts. The concentration of the sample in the mobile phase at the exit 32A of the mixing chamber 32 decays exponentially with time. The diluted sample flows from the mixing chamber 32A through tubing 34 to valve V1 and into the loop V1L.

6. Valve V1 is thrown at time $t_1$ (by action of timer T) stopped the dilution process at the point which corresponds to the dilution required. The volume of diluted sample present in the loop V1L at time $t_1$ is injected into the chromatographic system (consisting of column 24 and detection 26) by means of tubing 22.

In the preferred embodiment, the duration of the time delay between $t_0$ and $t_1$ is determined by conventionally calibrating the system by use of two samples that have been prediluted to two different known concentrations. An exponential curve is fitted to the two calibration points. Alternatively, the time dely is determined by calculation based on the flow rate of fluid through the system, the volume of chamber 32, the volume of tubing in the system, and the fluid volume of loop V2L in the second valve V2.

The time delay is measured in the preferred embodiment by a conventional computer controlled timer function which serves as timer T; alternatively, a conventional electromechanical or mechanical timer T is used. In either case, the first and second valves V1 and V2 are thrown by conventional electromechanical or pneumatic or electric means actuated by timer T. Alternatively, the timing is performed manually, for instance by a human operator using a stopwatch who then throws the valves manually.

Figure 3 shows graphically a curve C representing the operation of the present invention during a sample dilution, with time plotted along the horizontal axis and concentration of the sample (as a fraction of the sample plus solvent) at the outlet 32A of exponential mixing chamber 32 plotted logarithmically along the vertical axis. The time delay $(t_1 - t_0)$ between operation of second valve V2 and first valve V1, is shown, as are the two concentrations C1, C2 preferably used for calibration of the time delay as described above. Thus in order to achieve a precise predetermined concentration $C_P$ when testing a sample, the first valve is thrown at predetermined time $t_1$. The logarithmic vertical scale makes curve C a straight line as shown.

As seen in Figure 2, when the HPLC apparatus is operating continuously in terms of the mobile phase being continuously supplied from reservoir 12, but when actual sample testing is only being conducted intermittently, a quantity of mobile phase which comes out of detector 26 to tubing 28 is used to dilute the sample in valve V2, instead of the mobile phase being flushed to waste as in the prior art (see Figure 1). This process therefore conserves the expensive mobile phase solution.

In an alternative embodiment of the invention, to achieve even lower concentrations of the sample diluted in the solvent, the loop V2L in second valve V2 (see Figure 2) is only partially filled with sample which is then injected into the system as described above in the preferred embodiment. In this case, the amount of sample to be injected is determined by a separate metering device, such as a syringe (not shown), prior to entering loop V2L.

One alternative embodiment of the invention includes use of gases rather than liquids as solvent and sample. A second alternative embodiment does not involve HPLC, but applies the invention to any testing or other apparatus that dilutes a fluid in a system using circulation.

The above description of the invention is illustrative and not limiting; further embodiments will be obvious to one skilled in the art in the light of the teachings of the invention.

## Claims

1. A diluting apparatus comprising:
reservoir menas (10) for providing a first fluid;
supply means (V1) for accepting a predetermined amount of the first fluid from the reservoir means; and
mixing means (V2, 32) for mixing the predetermined amount of the first fluid present in the supply means with a predetermined amount of a second fluid and providing the resulting mixture to the supply means.

2. An apparatus as claimed in claim 1 wherein the mixing means comprises valve means (V2) for providing the predetermined amount of the second fluid; and a mixer (32) for mixing the first and the second fluid.

3. An apparatus as claimed in claim 2 wherein the valve means comprises a first multiport valve (V2).

4. An apparatus as claimed in claim 3 wherein the supply means comprises a second multiport valve (V1), means (34) for connecting the mixer (32) to the second multiport valve, and means (28) for connecting the supply means to the first multiport valve (V2).

5. An apparatus as claimed in claim 4 comprising timing means (T) for timing the operation of the first multiport valve (V2) relative to the operation of the second multiport valve (V1).

6. An apparatus as claimed in claim 5 wherein the timing means comprises a computer.

7. An apparatus as claimed in claim 4, 5 or 6 wherein the supply means comprises a chromatography system (24,26) connected to the second multiport valve (V1).

8. An apparatus as claimed in any one of the claims 2-7 wherein the mixer comprises an exponential mixing chamber (32).

9. An apparatus as claimed in any preceding claim wherein the reservoir means (10) comprises a pump (12).

10. An apparatus as claimed in any preceding claim wherein the second fluid is a sample and the first fluid is a solvent.

11. A method of diluting fluids comprising the steps of:
providing a predetermined amount of a first fluid to a recirculating system; and
mixing the first fluid in the recirculating system with a predetermined amount of a second fluid.

12. A method as claimed in claim 11 wherein the mixing step comprises providing the predetermined amount of the second fluid by means of a multiport valve.

13. A method as claimed in claim 12 comprising the provision of a predetermined time delay between the step of providing the predetermined amount of the second fluid and the step of providing the predetermined amount of the first fluid.

14. A method as claimed in claim 11, 12 or 13 comprising the step of testing the mixed first and second fluids by performing chromatography.

15. A method as claimed in claim 11, 12, 13 or 14 wherein the step of mixing is performed in an exponential mixing chamber.

16. A method as claimed in any one of claims 11-15 wherein the first fluid is a solvent.

FIGURE 1

PRIOR ART

**Figure 2**

Figure 3